# DEMANDE DE BREVET EUROPEEN

(11) **EP 1 136 322 A1**
(43) Date de publication de la demande: **26.09.2001**
(21) Numéro de dépôt: 01400734.8
(22) Date de dépôt: 21.03.2001
(51) Int. Cl.: B60R 7/02, B60R 5/04

(54) **Garniture intérieure pour compartiment à bagages**

(30) Priorité: 22.03.2000 FR 0003631
(71) Demandeur: Centre d'Etudes et Recherche pour l'Automobile ( CERA), 51100 Reims (FR)
(72) Inventeur: Bayle, André-Xavier, 51100 Reims (FR); Bieven, Franck, 75008 Paris (FR)
(74) Mandataire: Geismar, Thierry

(57) **Abrégé**

L'invention concerne une garniture intérieure pour compartiment à bagages de véhicule automobile.

Cette garniture comprend au moins un panneau (2) monté pivotant autour d'un ses bords, ledit panneau présentant, lorsqu'il est dans une première position sensiblement horizontale, une face supérieure revêtue d'un premier revêtement relativement fragile, et dégageant, lorsqu'il est dans une autre position, une surface sensiblement horizontale revêtue d'un autre revêtement relativement peu fragile.

Application notamment aux véhicules de type break ou monospace.

## Description

La présente invention concerne une garniture intérieure pour compartiment à bagages de véhicule automobile, plus particulièrement pour un tel compartiment comportant au moins un plancher et deux parois latérales.

Les compartiments à bagages des véhicules automobiles, notamment des véhicules de type break ou monospace où ces compartiments sont en communication directe avec l'habitacle, doivent répondre à deux objectifs contradictoires.

D'une part, sur le plan de l'esthétique, ils doivent présenter un aspect satisfaisant et comporter par conséquent un revêtement adéquat. Ce revêtement doit par ailleurs recevoir des objets fragiles et ne devant pas être salis, tels que des vêtements. Un revêtement satisfaisant à ces objectifs est par exemple constitué d'un tissu ou d'une moquette.

D'autre part, l'utilisateur du véhicule doit être en mesure de charger dans son compartiment à bagages des objets salissants ou encombrants qui sont donc susceptibles soit de salir soit de détériorer le revêtement. Le revêtement d'un compartiment à bagages doit par conséquent être résistant, notamment aux déchirures et à l'abrasion, et pouvoir être facilement nettoyé. Un revêtement satisfaisant à ces objectifs est par exemple constitué d'une toile à bâche ou d'une feuille de caoutchouc.

Il est donc difficile de trouver un revêtement répondant à ces divers impératifs.

Un autre problème rencontré lors du chargement d'un objet encombrant est lié au risque d'endommagement ou de salissure du de la bordure du compartiment à bagages ou de la barre de seuil, ainsi que, dans les véhicules du type break ou monospace, de la banquette arrière.

La présente invention vise à pallier ces inconvénients.

Plus particulièrement, l'invention a pour but de fournir une garniture intérieure pour compartiment à bagages de véhicule automobile qui soit à la fois satisfaisante sur le plan de l'esthétique, et qui permette le chargement d'objet sales ou encombrants.

L'invention a également pour but de fournir des moyens permettant de protéger de la bordure du compartiment à bagages et de la barre de seuil lors du chargement de tels objets.

A cet effet, l'invention a pour objet une garniture intérieure pour compartiment à bagages de véhicule automobile comportant au moins un plancher et deux parois latérales,
caractérisée par le fait qu'elle comprend au moins un panneau monté pivotant autour d'un ses bords, ledit panneau présentant, lorsqu'il est dans une première position sensiblement horizontale, une face supérieure revêtue d'un premier revêtement relativement fragile, et dégageant, lorsqu'il est dans une autre position, une surface sensiblement horizontale revêtue d'un autre revêtement relativement peu fragile.

On observera en premier lieu que les termes "relativement fragile" et "relativement peu fragile" doivent s'entendre l'un par rapport à l'autre et en fonction des objectifs précités. Le revêtement "relativement fragile" est un revêtement choisi essentiellement pour son esthétique et sa capacité à recevoir des objets eux-mêmes fragiles, par exemple un tissu ou une moquette, et le revêtement "relativement peu fragile" est un revêtement choisi essentiellement pour sa résistance et sa facilité de nettoyage, par exemple une toile à bâche ou une feuille de caoutchouc. Bien entendu, cela n'exclut pas que le revêtement "relativement fragile" soit en soi résistant et nettoyable, ni que le revêtement "relativement peu fragile" présente à la vue un aspect convenable.

Dans un premier mode de réalisation, ladite garniture comprend deux panneaux généralement rectangulaires et plans ayant chacun un premier bord longitudinal en bordure latérale du compartiment, un deuxième bord longitudinal sensiblement dans le plan de symétrie du véhicule, un premier bord transversal à l'avant du compartiment, et un deuxième bord transversal à l'arrière du compartiment,
chacun des panneaux étant monté pivotant autour de son premier bord longitudinal entre une position sensiblement horizontale au-dessus du plancher du compartiment et une position sensiblement verticale le long des parois latérales du compartiment,
les faces supérieures des panneaux, faisant face à l'opposé du plancher lorsque les panneaux sont dans leur position sensiblement horizontale, étant revêtues d'un premier revêtement relativement fragile, et
la surface supérieure du plancher étant revêtue d'un autre revêtement relativement peu fragile.

Ainsi, lorsque les panneaux sont repliés en position horizontale, ils présentent, vu de l'extérieur, un aspect satisfaisant. Ils peuvent en particulier avoir le même revêtement que l'habitacle du véhicule.

Lorsque ces panneaux sont dépliés verticalement, le plancher du compartiment à bagages apparaît, avec un revêtement robuste ne craignant ni les salissures ni les accrocs ou le frottement.

Dans un mode de réalisation particulier, les faces inférieures des panneaux, faisant face au plancher lorsque les volets sont dans leur position sensiblement horizontale, sont également revêtues d'un autre revêtement relativement peu fragile.

Ainsi, ces faces sont protégées comme le plancher lorsque les panneaux sont en position verticale.

Egalement dans un mode de réalisation particulier, ledit plancher est un faux plancher disposé au-dessus d'un fond de structure du compartiment, lesdits panneaux étant articulés sur les bords latéraux dudit plancher.

Dans ce cas, le faux plancher et les panneaux forment un ensemble unitaire constituant la garniture selon l'invention.

Egalement dans un mode de réalisation particulier, la garniture selon l'invention comprend une bâche dont un bord est monté le long du bord arrière dudit plancher, ladite bâche étant agencée pour être repliée entre le faux plancher et lesdits panneaux lorsque ceux-ci sont en position horizontale, et pour être déployée à l'extérieur du compartiment lorsque lesdits panneaux sont en position verticale.

Les panneaux étant dépliés, la bâche est donc déployée à l'extérieur du compartiment à bagages, recouvrant la bordure du compartiment à bagages et de la barre de seuil. Cette bordure et la barre de seuil sont donc protégés lors du chargement d'objets susceptibles de les souiller ou de les endommager. La bâche est ensuite rabattue sur les objets chargés ou fixée par ses angles aux angles des panneaux dépliés pour permettre la fermeture du compartiment à bagages.

Lorsque les panneaux sont articulés sur un faux plancher, la bâche fait partie de l'ensemble unitaire.

Egalement dans un mode de réalisation particulier, la garniture selon l'invention comprend une paroi de fond agencée pour venir en doublure d'une paroi de fond du compartiment à bagages lorsque lesdits panneaux sont en position verticale.

La paroi de fond de la garniture protège donc la paroi de fond du compartiment à bagages, ce qui est particulièrement utile lorsque cette dernière est constituée par la face arrière d'une banquette.

Lorsque les panneaux sont articulés sur un faux plancher, la paroi de fond de la garniture fait partie de l'ensemble unitaire.

Plus particulièrement, ladite paroi de fond de la garniture peut être un troisième panneau monté pivotant autour d'un bord transversal à l'avant du compartiment à bagages entre une position sensiblement horizontale au-dessus du plancher du compartiment à bagages et une position sensiblement verticale le long de la paroi de fond du compartiment à bagages.

Dans ce dernier cas, le troisième panneau peut d'ailleurs dépasser cette position verticale et venir protéger le dossier de la banquette arrière quand il est rabattu à l'horizontale vers l'avant du véhicule. Il peut éventuellement être fractionnable dans le cas de dossier de banquette fractionné de type 2/3-1/3 ou autre.

Ladite paroi de fond de la garniture peut également être une bâche généralement rectangulaire dont un premier bord est monté le long du bord avant dudit plancher et dont les deux bords adjacents audit premier bord sont chacun montés le long du premier bord transversal d'un desdits panneaux, ladite bâche étant repliée sous les panneaux lorsque ceux-ci sont en position horizontale.

Dans un deuxième mode de réalisation, ledit panneau est pivotant de sensiblement 180°, son autre face étant revêtue d'un autre revêtement relativement peu fragile.

Ainsi, le plancher du compartiment à bagages peut par exemple être formé d'une partie revêtue d'un revêtement relativement fragile et d'une partie revêtue d'un revêtement relativement peu fragile. Dans une de ses positions horizontales, le panneau recouvre la partie revêtue du revêtement relativement fragile et présente vers le haut sa face revêtue du revêtement relativement peu fragile. Dans son autre position horizontale, le panneau recouvre la partie revêtue du revêtement relativement peu fragile et présente vers le haut sa face revêtue du revêtement relativement peu fragile. Le plancher du comportement à bagages présente donc l'aspect souhaité en fonction de la position du panneau pivotant.

Ledit panneau peut par exemple être pivotant autour d'un de ses bords transversaux.

Dans ce cas, la garniture selon l'invention peut en outre comprendre deux demi-panneaux présentant une face supérieure revêtue d'un premier revêtement relativement fragile et une face inférieure revêtue d'un autre revêtement relativement peu fragile, un demi-panneau avant étant monté pivotant autour de son bord transversal avant sur la structure du compartiment à bagages, un demi-panneau arrière étant monté pivotant autour de son bord transversal avant sur le bord transversal arrière du premier demi-panneau, et ledit panneau étant monté pivotant autour de son bord transversal avant sur le bord transversal arrière du demi-panneau arrière.

On verra qu'un tel agencement permet de multiples possibilités d'aménagement du compartiment à bagages.

On décrira maintenant, à titre d'exemple non limitatif, des modes de réalisation particuliers de l'invention, en référence aux dessins schématiques annexés dans lesquels :
- la figure 1 est une vue dessus d'une garniture selon un premier mode de réalisation de l'invention, en position repliée ;
- la figure 2 est une vue en perspective de la garniture de la figure 1 en position dépliée dans le compartiment à bagages d'un véhicule automobile ;
- la figure 3 est une vue en coupe partielle selon la ligne III-III de la figure 1 ;
- la figure 4 est une vue similaire à la figure 1 d'une garniture selon un deuxième mode de réalisation de l'invention ;
- la figure 5 est une vue en perspective d'une garniture selon un troisième mode de réalisation de l'invention ; et
- les figures 6a à 6d sont des vues longitudinales de quatre configurations d'une garniture selon un quatrième mode de réalisation de l'invention.

L'avant du véhicule est désigné dans les dessins par la flèche AV. On entend par "longitudinal" parallèle à cette flèche et par "transversal" perpendiculaire à cette flèche.

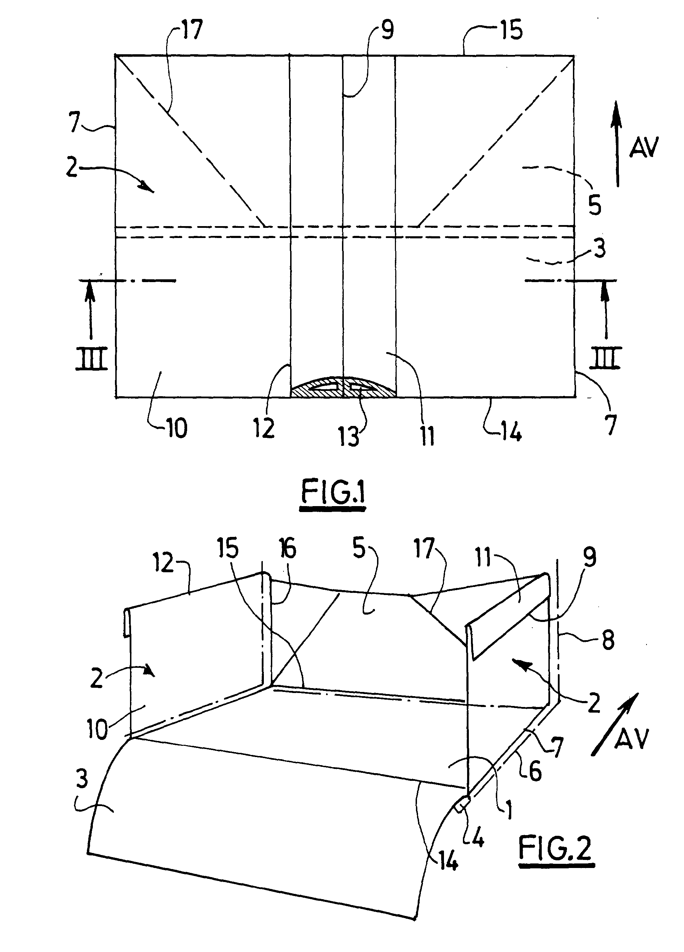

Dans le mode de réalisation représenté aux figures 1 à 3, la garniture est composée pour l'essentiel d'un plancher 1 rectangulaire, de deux panneaux latéraux 2 également rectangulaires, d'une bâche 3 de protection du pare-chocs 4 du véhicule, et d'une bâche 5 formant paroi de fond de la garniture.

Le plancher 1 constitue ici un faux plancher disposé au-dessus du fond structurel 6 du compartiment à bagages.

Chaque panneau 2 est articulé le long d'un de ses bords longitudinaux à un des bords longitudinaux extérieurs du plancher 1. L'articulation 7 ainsi formée peut être de tout type convenable, par exemple une articulation textile.

Dans la position de la figure 1, les panneaux 2 sont repliés horizontalement sur le plancher 1. Dans la position de la figure 2, ces panneaux sont dépliés sensiblement verticalement contre les parois latérales intérieures 8 du compartiment à bagages.

Dans la position de la figure 1, les bords longitudinaux 9 des panneaux 2 opposés à l'articulation 7 sont sensiblement adjacents dans le plan longitudinal médian de la garniture.

Les panneaux 2 sont ici réalisés en deux parties, à savoir un volet principal 10 et un volet rabattable 11 articulé sur le volet principal 10 par une articulation 12 sensiblement parallèle à l'articulation 7 et au bord 9, par exemple une articulation textile. Dans la position de la figure 1, les volets rabattables sont dans le plan horizontal, dans le prolongement des volets 10 pour permettre aux bords 9 de se rejoindre. Dans la position de la figure 2, les volets 11 sont rabattus à 180° autour des articulations 12 pour diminuer la hauteur de la garniture, de sorte que celle-ci ne dépasse pas la hauteur du compartiment à bagages ou d'un cache-bagages.

Chaque volet rabattable comporte une poignée 13 permettant de soulever le panneau 2 correspondant.

La bâche 3 est sensiblement rectangulaire et est fixée par un de ses bords le long du bord transversal arrière 14 du plancher 1.

La bâche 5 à trois de ses côtés fixés respectivement le long du bord transversal avant 15 du plancher 1 et le long du bord transversal avant 16 de chaque panneau 2. Cette bâche comporte deux lignes de pliage 17 lui permettant de se replier en formant deux soufflets lorsque les panneaux 2 sont repliés dans la position de la figure 1.

Les bâches 3 et 5 sont fixées au plancher 1 et aux panneaux 2 par tout moyen convenable, par exemple par collage, couture ou soudage.

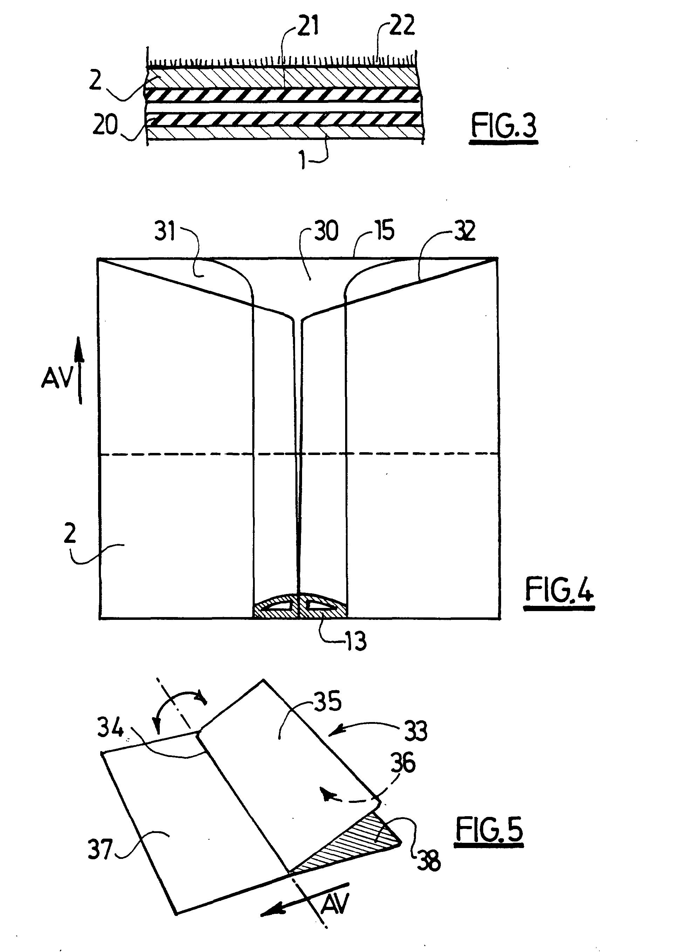

Comme montré à la figure 3, la surface supérieure du plancher 1 comporte un revêtement robuste 20, par exemple une feuille de caoutchouc. La face inférieure du panneau 2 comporte un revêtement 21 du même type, et la face supérieure de ce panneau comporte un revêtement 22 adapté aux garnitures intérieures du véhicule, par exemple une moquette.

Ainsi, lorsque la garniture est dans sa position repliée de la figure 1, elle présente à la vue un aspect satisfaisant. Lorsqu'un objet salissant ou encombrant doit être chargé dans le compartiment à bagages, la garniture est dépliée dans sa position de la figure 2 où les revêtements 20 et 21 peuvent recevoir cet objet sans risques.

Dans le mode de réalisation de la figure 4, la bâche 5 est remplacée par un panneau rigide 30 articulé le long du bord transversal avant 15 du plancher 1. Ce panneau est représenté dans sa position repliée mais peut être redressé contre la paroi de fond du compartiment à bagages. Il peut également être rabattu entièrement ou en partie à 180° dans le cas de dossier rabattu.

Le panneau 30 est garni comme les panneaux 2 de moquette sur sa face supérieure (dans la position de la figure 4) et d'un revêtement résistant sur sa face inférieure.

Les bords transversaux avant des panneaux 2 forment ici des rabats 31 articulés autour d'une articulation 32 pour permettre le déploiement des panneaux 2 lorsque la paroi de fond du compartiment à bagages est inclinée. Ces rabats 31 peuvent en outre comporter des moyens de fixation (non représentés) pour maintenir le panneau 30 en position dépliée.

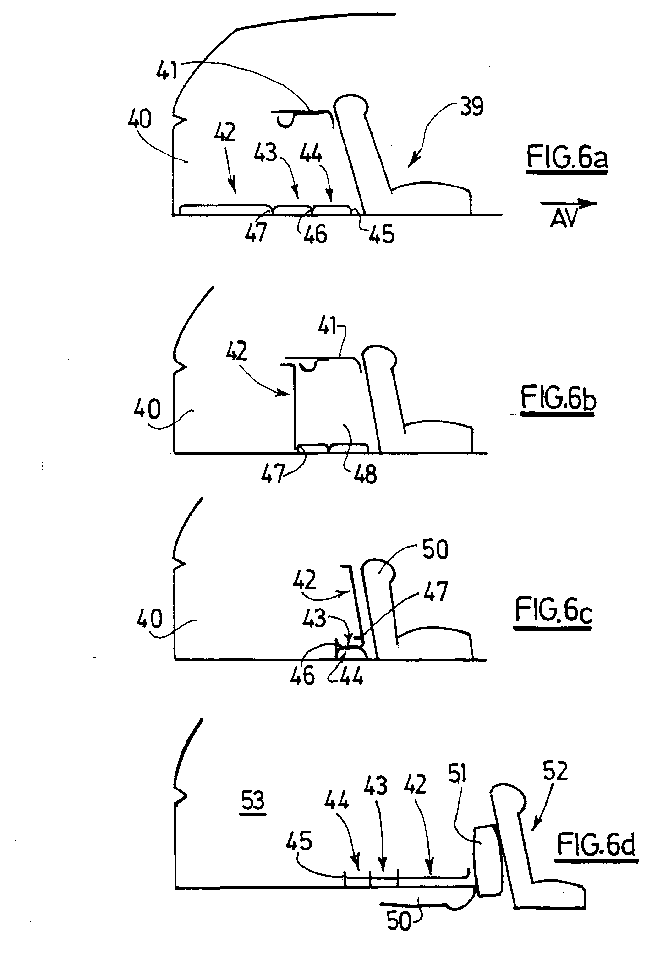

Si l'on se reporte maintenant à la figure 5, on voit un mode de réalisation de garniture comportant un seul panneau 33 pivotant à 180° autour d'un axe 34 qui est ici transversal par rapport au véhicule.

Le panneau 33 présente une face 35, qualifiée ici de supérieure, revêtue d'un revêtement relativement fragile et une face 36, qualifiée d'inférieure, revêtue d'un revêtement relativement peu fragile. Il recouvre sensiblement la moitié du plancher du compartiment à bagages.

Ce plancher est lui-même formée de deux moitiés. Une moitié 37 en vis-à-vis de la face 35 du panneau 33 est revêtue d'un revêtement relativement fragile et une moitié 38 en vis-à-vis de la face 36 est revêtue d'un revêtement relativement peu fragile.

Lorsque la panneau 33 est disposé au-dessus de la moitié de plancher 38, le compartiment à bagages présente un aspect de type moquette. Lorsque la panneau 33 est disposé au-dessus de la moitié de plancher 37, le compartiment à bagages présente un aspect de type robuste et lavable.

Bien entendu, l'axe 24 pourrait être longitudinal. De même, on pourrait prévoir deux panneaux pivotants recouvrant chacun un quart de la surface du plancher.

On décrira maintenant le mode de réalisation des figures 6.

On voit dans ces figures l'arrière d'un véhicule du type monospace ou break, avec la banquette arrière 39, un volume de rangement 40, et la tablette arrière 41.

Le plancher du volume 40 est revêtu d'un revêtement relativement peu fragile et est, dans la configuration de la figure 6a, recouvert par un panneau arrière 42, un demi-panneau arrière 43 et un demi-panneau avant 44. Les faces supérieures, dans cette configuration, des panneau et demi-panneaux 42-44 sont revêtues d'un revêtement relativement fragile, et leurs faces inférieures sont revêtues d'un revêtement relativement peu fragile.

Le demi-panneau avant 44 est monté pivotant autour de son bord transversal avant sur la structure du volume 40 par une articulation 45, le demi-panneau arrière 43 est monté pivotant autour de son bord transversal avant sur le bord transversal arrière du demi-panneau arrière 44 par une articulation 46, et le panneau 42 est monté pivotant autour de son bord transversal avant sur le bord transversal arrière du demi-panneau arrière 43 par une articulation 47.

Dans la configuration de la figure 6a, l'ensemble du volume 40 forme un compartiment à bagages revêtu par exemple de moquette.

Dans la figure 6b, le panneau 42 est replié sensiblement à la verticale autour de l'articulation 47 et est fixé dans cette position au bord arrière de la tablette arrière 41. Ce panneau 42 délimite donc deux compartiments à bagages séparés, à savoir un compartiment avant fermé 48 recouvert de moquette et un compartiment arrière ouvert 49 recouvert par exemple de PVC. Ce second compartiment peut lui-même être fermé par un cache-bagages fixé à la tablette 41.

Dans la figure 6c, le demi-panneau arrière 43 est replié sur le demi-panneau avant 44 autour de l'articulation 46, et le panneau 42 est replié sensiblement à la verticale autour de l'articulation 47, contre la face arrière du dossier 50 de la banquette 39. Dans cette position, l'articulation 47 est donc inversée à 180° par rapport à sa position de la figure 6b. L'ensemble du volume 40 est alors recouvert de PVC.

Enfin, dans la figure 6d, la banquette arrière est repliée avec son assise 51 contre la face arrière des sièges avant 52 et son dossier 50 encastré dans le plancher de l'habitacle. Les panneau et demi-panneaux 42-44 sont inversés autour de l'articulation 45 par rapport à la configuration de la figure 6a. Toute la partie 53 du véhicule située en arrière des sièges avant 52 forme alors un compartiment à bagages recouvert de PVC.

## Revendications

1. Garniture intérieure pour compartiment à bagages de véhicule automobile comportant au moins un plancher (1) et deux parois latérales (8),
**caractérisée par** le fait qu'elle comprend au moins un panneau (2 ; 33 ; 42-44) monté pivotant autour d'un ses bords, ledit panneau présentant, lorsqu'il est dans une première position sensiblement horizontale, une face supérieure revêtue d'un premier revêtement (22) relativement fragile, et dégageant, lorsqu'il est dans une autre position, une surface sensiblement horizontale revêtue d'un autre revêtement (20) relativement peu fragile.

2. Garniture selon la revendication 1, comprenant deux panneaux (2) généralement rectangulaires et plans ayant chacun un premier bord longitudinal (7) en bordure latérale du compartiment, un deuxième bord longitudinal (9) sensiblement dans le plan de symétrie du véhicule, un premier bord transversal à l'avant du compartiment, et un deuxième bord transversal (16) à l'arrière du compartiment,
chacun des panneaux étant monté pivotant autour de son premier bord longitudinal entre une position sensiblement horizontale au-dessus du plancher du compartiment et une position sensiblement verticale le long des parois latérales du compartiment,
les faces supérieures des panneaux, faisant face à l'opposé du plancher lorsque les panneaux sont dans leur position sensiblement horizontale, étant revêtues d'un premier revêtement (22) relativement fragile, et
la surface supérieure du plancher (1) étant revêtue d'un autre revêtement (20) relativement peu fragile.

3. Garniture selon la revendication 2, dans laquelle les faces inférieures des panneaux, faisant face au plancher lorsque les volets sont dans leur position sensiblement horizontales, sont également revêtues d'un autre revêtement (21) relativement peu fragile.

4. Garniture selon l'une quelconque des revendications 2 et 3, dans laquelle ledit plancher (1) est un faux plancher disposé au-dessus d'un fond de structure (6) du compartiment, lesdits panneaux étant articulés sur les bords latéraux dudit faux plancher.

5. Garniture selon l'une quelconque des revendications 2 à 3, comprenant une bâche (3) dont un bord est monté le long du bord arrière (14) dudit plancher, ladite bâche étant agencée pour être repliée entre le plancher et lesdits panneaux (2) lorsque ceux-ci sont en position horizontale, et pour être déployée à l'extérieur du compartiment lorsque lesdits panneaux sont en position verticale.

6. Garniture selon l'une quelconque des revendications 2 à 5, comprenant une paroi de fond (5 ; 30) agencée pour venir en doublure d'une paroi de fond du compartiment lorsque lesdits panneaux (2) sont en position verticale.

7. Garniture selon la revendication 6, dans laquelle ladite paroi de fond de la garniture est un troisième panneau (30) monté pivotant autour d'un bord transversal (15) à l'avant du compartiment entre une position sensiblement horizontale au-dessus du plancher (1) du compartiment et une position sensiblement verticale le long de la paroi de fond du compartiment.

8. Garniture selon la revendication 6, dans laquelle ladite paroi de fond de la garniture est une bâche (5) généralement rectangulaire dont un premier bord est monté le long du bord avant (15) dudit plancher et dont les deux bords adjacents audit premier bord sont chacun montés le long du premier bord transversal (16) d'un desdits panneaux (2), ladite bâche étant repliée sous les panneaux lorsque ceux-ci sont en position horizontale.

9. Garniture selon la revendication 1, dans laquelle ledit panneau (33 ; 42-44) est pivotant de sensiblement 180°, son autre face étant revêtue d'un autre revêtement relativement peu fragile.

10. Garniture selon la revendication 9, dans laquelle ledit panneau est pivotant autour d'un de ses bords transversaux (34 ; 45-47).

11. Garniture selon la revendication 10, comportant en outre deux demi-panneaux (43, 44) présentant une face supérieure revêtue d'un premier revêtement relativement fragile et une face inférieure revêtue d'un autre revêtement relativement peu fragile, un demi-panneau avant (44) étant monté pivotant autour de son bord transversal avant (45) sur la structure du compartiment à bagages, un demi-panneau arrière (43) étant monté pivotant autour de son bord transversal avant (46) sur le bord transversal arrière du premier demi-panneau, et ledit panneau (42) étant monté pivotant autour de son bord transversal avant (47) sur le bord transversal arrière du demi-panneau arrière.
